# DEMANDE DE BREVET EUROPEEN

(11) **EP 0 666 607 A1**
(43) Date de publication de la demande: **09.08.1995**
(21) Numéro de dépôt: 94402745.7
(22) Date de dépôt: 30.11.1994
(51) Int. Cl.: H01M 6/18

(54) **Additifs pour l'extrusion des électrolytes polymères**

(30) Priorité: 25.01.1994 US 186103
(71) Demandeur: HYDRO-QUEBEC, Montréal, Québec J2Z 1A4 (CA)
(72) Inventeur: Brochu, Fernand, Longueil Quebec J4L 3B1 (CA); Duval, Michel, Montréal Québec H3W 1T8 (CA)
(74) Mandataire: Levy, David

(57) **Abrégé**

Préparation d'un film d'électrolyte pour batteries au lithium/électrolyte polymère par extrusion d'un mélange de poudres de polymère, de sel de lithium et d'un additif constitué par une poudre ultra fine d'un oxyde métallique, notamment de silice, d'alumine, d'oxyde de titane, et d'autres dont la granulométrie se situe entre environ 7 et 40 nm. Le but de l'additif est d'empêcher la formation de blocs solides collants dans le mélange de poudres et de permettre l'introduction de ce mélange dans l'extrudeuse. Les compositions d'électrolyte, les électrolytes ainsi que les générateurs électrochimiques obtenus selon l'invention sont aussi décrits.

## Description

La présente invention concerne des additifs pour l'obtention de poudres de polymères non collantes pour l'extrusion des électrolytes des accumulateurs à électrolyte polymère, ci-après désignés ACEP. Plus précisément l'invention se rapporte à un procédé de préparation d'un film d'électrolyte pour batteries au lithium/électrolyte polymère. Parallèlement, l'invention concerne des compositions pour la préparation d'un film d'électrolyte pour les batteries mentionnées ci-dessus, des électrolytes constitués de ces compositions ainsi que des générateurs comportant les électrolytes dont il a été question ci-haut.

Les batteries au lithium/électrolyte polymère ACEP sont fabriquées en superposant trois types de films principaux: un film d'électrode positive contenant un matériau électrochimiquement actif comme l'oxyde de vanadium, un film d'électrolyte composé de polymère et de sel de lithium et un film de lithium. Chacun de ces films a entre 15 et 50 µm d'épaisseur, pour une épaisseur totale de film élémentaire de batterie de 100 à 150 µm. Une trentaine de mètres de film élémentaire de 15 cm de large sont typiquement nécessaires pour obtenir une batterie de 100 wh.

Le film d'électrolyte est fabriqué principalement par voie solvant mais la voie fondue par extrusion est également considérée en raison de ses nombreux avantages. Les copolymères amorphes utilisés dans les batteries ACEP peuvent être extrudés facilement sous forme d'électrolyte sans sel. Il faut alors préparer des électrodes positives contenant un excès de sel, par voie solvant, mais elles sont plus difficiles à obtenir avec les qualités voulues d'uniformité et d'adhésion sur le collecteur, que les électrodes positives qui renferment une quantité normale de sel.

Lorsqu'on tente d'extruder des copolymères avec un sel, on fait face au problème suivant: quand on mélange la poudre de copolymère à la poudre de sel de lithium, il se forme de gros blocs solides collants de complexe polymère-sel, qui bloquent l'introduction du mélange dans la vis de l'extrudeuse, et qui ne peuvent être réduits sous forme de pastilles. Le même problème se pose avec les mélanges polymères cristallins (du type polyoxyde d'éthylène-sel).

Une solution partielle consiste à introduire les poudres de polymère et de sel séparément sur l'extrudeuse, mais la mesure des quantités relatives de chacune des poudres n'est pas très précise et, de plus, les poudres n'ayant pas le temps de se mélanger parfaitement, les films obtenus ne sont pas très homogènes.

Selon l'invention, on propose une approche qui consiste à utiliser des additifs permettant d'obtenir des mélanges polymère-sel sous forme de poudres fines faciles à introduire dans une extrudeuse et d'éviter la formation de blocs solides collants.

L'invention a pour objet de proposer des additifs, à base de poudres ultra fines, dont la granulométrie se situe entre environ 7 et 40 nm, notamment de silice ou d'autres composés minéraux, par exemple des oxydes, qui n'affectent pas la performance électrochimique des batteries de type ACEP.

L'addition de poudres de silice ou d'alumine dans les électrolytes ACEP a été proposée par Wieczorek et coll. (2nd Int. Symp. Polym. Elect., 1990, pp.339-347) mais uniquement dans le but plus conventionnel d'améliorer les propriétés mécaniques et thermiques des électrolytes préparés par voie solvant, et avec des particules beaucoup plus grosses (2 à 30 µm) ne permettant pas d'obtenir les effets voulus par extrusion des polymères et des sels de lithium.

L'invention a aussi pour objet la mise au point d'additifs permettant d'obtenir des poudres non collantes d'électrolyte polymère-sel qu'on peut introduire dans une extrudeuse pour préparer lesdits électrolytes par voie fondue.

Un autre objet de l'invention réside en l'utilisation d'additifs, notamment à base de poudres de silice pyrogénée de type AÉROSIL^{MC} , constituées de particules ultrafines (7 à 40 nm), de préférence traitées chimiquement en surface pour éliminer les groupements polaires siloxanes ou silanols.

L'invention est relative à un procédé de préparation d'un film d'électrolyte pour batteries au lithium/électrolyte polymère, par extrusion d'un polymère et d'un sel de lithium utilisables dans ledit électrolyte. Le procédé est caractérisé en ce que l'on effectue l'extrusion dudit polymère avec ledit sel de lithium en présence de poudres ultra fines d'oxyde métallique dont la granulométrie se situe entre environ 7 et 40 nm.

De préférence les oxydes métalliques sont choisis parmi les oxydes de silicium, d'aluminium, et de titane, et la silice pyrogénée est particulièrement intéressante. On utilise de préférence celle ayant une surface BET de 50 à 400 m²/g et contenant plus de 99,8% de silice.

Selon une autre réalisation préférée de l'invention on mélange d'abord de la poudre du polymère avec de la poudre de la silice pyrogénée, on mélange séparément de la poudre de sel de lithium avec une nouvelle quantité de poudre de silice pyrogénée, on rassemble les deux mélanges de poudres et on ajoute une nouvelle quantité de poudre de silice pyrogénée, et l'on procède finalement à l'extrusion du mélange final.

L'invention concerne aussi une composition pour la préparation d'un film d'électrolyte pour batteries au lithium/électrolyte polymère caractérisée en ce qu'elle comprend un polymère et un sel de lithium utilisables dans ces électrolytes et des poudres ultra fines d'oxydes métalliques dont la granulométrie se situe entre environ 7 et 40 nm.

L'invention concerne aussi les électrolytes et les générateurs électrochimiques fabriqués à partir des compositions selon l'invention.

Parmi les polymères que l'on utilise de préférence pour la formation des électrolytes selon l'invention, on peut mentionner les familles de polymères utilisables dans les électrolytes ACEP décrits dans le brevet Armand U.S. No. 4.303.748, ainsi que les copolymères et terpolymères amorphes, réticulables ou non, décrits plus en détail dans les brevets U.S. 4.578.326, U.S. 4.357.901 et Canada 1.269.702.

Quant aux sels de lithium, on choisit de préférence les familles de sels utilisables dans les électrolytes ACEP décrits dans le brevet Armand U.S. No. 4.303.748, ainsi que les sels plus élaborés à base de terfluorosulfonimide de lithium (TFSI) ou de bisperhalogénoacyl ou sulfonylimides de lithium (TFSM) réticulables ou non, décrits dans les brevets U.S. 4.505.997, U.S. 4.818.694 et PCT WO92/02966 du 25 juillet 1991.

Les additifs d'extrusion que l'on préfère sont les poudres ultra fines ("fumées") de silice pyrogénée, disponibles commercialement de la Compagnie Degussa sous la marque de commerce AÉROSIL ou de la Compagnie Cabot Chemical sous la marque de commerce CABOSIL. Les particules de silice non-traitées ont en surface des groupes silanols et siloxanes hydrophiles. Les particules de silice traitées chimiquement à l'aide de silane (AÉROSIL de type R) ont en surface des groupements hydrophobes CH₃ ou autres. Les particules traitées conviennent particulièrement pour les applications électrochimiques car elles ne réagissent pas avec le lithium et conduisent à des piles ACEP présentant de meilleures performances électrochimiques.

Ces particules ont normalement une granulométrie de 7 à 40 nm, une surface BET de 50 à 400 m2/g et contiennent plus de 99,8% de silice. Des poudres du même type mais en alumine, oxyde de titane ou autres oxydes métalliques conviennent également.

Bien que la façon de préparer les mélanges de poudres ne pose aucun problème à l'homme de l'art, on préfère procéder comme suit. On commence par mélanger de la poudre de polymère avec de la poudre notamment d'AÉROSIL pour réduire le caractère collant du polymère, on mélange également de la poudre de sel de lithium avec de la poudre d'AÉROSIL pour isoler les grains de sel les uns des autres. Puis on rassemble les deux mélanges de poudres et on rajoute un peu de poudre d'AÉROSIL pour finir de séparer les phases collantes de complexe polymère-sel. On pourrait évidemment utiliser tout autre poudre d'oxyde métallique.

La quantité de poudre d'oxyde métallique nécessaire, par exemple d'AÉROSIL, augmente avec la quantité relative de sel dans le polymère et avec le caractère amorphe et collant du complexe polymère-sel comme cela paraîtra évident à l'homme de l'art. Normalement, 2% à 10% d'AÉROSIL en poids par rapport au complexe polymère-sel permettent d'obtenir les propriétés désirées, avec 5% comme valeur typique.

L'invention va maintenant être illustrée par les exemples non limitatifs qui suivent:

### Exemple 1

De la poudre de copolymère (Mw ∼ 200.000) est introduite dans une extrudeuse à double vis de 3,8 cm de diamètre de marque Echlin, chauffée à 160°C. Le copolymère fondu sort par une filière de 20 cm de largeur et est déposé sur un support en polypropylène sous la forme d'un film de polymère d'épaisseur uniforme d'environ 30 µm.

### Exemple 2

Dans un récipient maintenu sous atmosphère sèche pour éviter l'absorption d'eau par le sel de lithium très hygroscopique, on rajoute petit à petit 2,2 kg de poudre de terfluorosulfonimide de lithium (TFSI) à 10 kg de poudre de copolymère (Mw ∼ 200.000), en agitant en permanence le récipient sur des rouleaux. Il se forme d'énormes blocs collants de complexe polymère sel de 2 à 10 cm de diamètre, qui bloquent l'entrée de l'extrudeuse quand on cherche à les y introduire.

### Exemple 3

Un compounder à double vis de marque Warner and Pfilder est utilisé pour alimenter la filière d'extrusion. La poudre de copolymère est introduite à une extrémité du compounder et celle du sel de lithium au milieu du compounder, à l'aide de dispositifs d'alimentation en poudres à vis, contrôlés par mesure du poids introduit. On obtient un film d'électrolyte d'épaisseur environ 30 µm mais peu homogène, avec des concentrations locales en sel nettement visibles: De plus, la poudre très fine de TFSI colle en partie sur les parois du dispositif d'alimentation et est difficile à contrôler de façon quantitative.

### Exemple 4

10 kg de poudre de copolymère (Mw ∼ 200.000) et 0,2 kg d'AÉROSIL R 974 sont introduits dans un mélangeur et agités pendant 10 minutes. 2,2 kg de sel de lithium TFSI et 0,2 kg d'AÉROSIL R 974 sont traités de la même façon pendant 10 minutes. Les deux mélanges sont rassemblés et agités 10 minutes puis 0,2 kg AÉROSIL R 974 est ajouté et l'ensemble agité une dernière fois 10 minutes. On obtient une poudre fine non collante qu'on peut facilement introduire dans l'extrudeuse de l'exemple 1, chauffée à 80 °C dans sa première partie et 100 °C dans la filière. On obtient un film d'électrolyte d'épaisseur uniforme de 30 µm et homogène. Une pile ACEP montée avec cet électrolyte présente des performances électrochimiques comparables à celles obtenues par les voies solvant conventionnelles.

### Exemple 5

On procède comme dans l'exemple 4 mais avec du polyoxyde d'éthylène commercial (Mw ∼ 200.000), un polymère cristallin. On obtient des résultats comparables à ceux obtenus à l'exemple 4.
Les réalisations de l'invention au sujet desquelles un droit exclusif de propriété ou de privilège est revendiqué, sont définies comme il suit:

## Revendications

1. Procédé de préparation d'un film d'électrolyte pour batteries au lithium/électrolyte polymère, par extrusion d'un polymère et d'un sel de lithium utilisables dans lesdits électrolytes, caractérisé en ce que l'on effectue l'extrusion dudit polymère avec ledit sel de lithium, en présence de poudres ultra fines d'oxyde métallique dont la granulométrie se situe entre environ 7 à 40 nm, qui empêchent la formation de blocs solides collants dans le mélange de poudres à extruder et permettent au contraire l'introduction facile dudit mélange dans l'extrudeuse.

2. Procédé de préparation d'un film d'électrolyte selon la revendication 1, caractérisé en ce que les oxydes métalliques sont choisis parmi les oxydes de silicium, d'aluminium, et de titane.

3. Procédé de préparation d'un film d'électrolyte selon la revendication 1, caractérisé en ce que la poudre ultra fine consiste en une silice pyrogénée.

4. Procédé de préparation d'un film d'électrolyte selon la revendication 3 caractérisé en ce que lesdites poudres de silice pyrogénée ont une surface BET de 50 à 400 m²/g et contiennent plus de 99,8% de silice.

5. Procédé de préparation d'un film d'électrolyte selon la revendication 3, caractérisé en ce que l'on mélange d'abord de la poudre dudit polymère avec de la poudre de ladite silice pyrogénée, on mélange séparément de la poudre de sel de lithium avec une nouvelle quantité de poudre de silice pyrogénée, on rassemble les deux mélanges de poudres et on rajoute une nouvelle quantité de poudre de silice pyrogénée, et l'on procède finalement à l'extrusion des deux mélanges rassemblés additionnés de ladite poudre de silice pyrogénée.

6. Procédé de préparation d'un film d'électrolyte selon la revendication 3, caractérisé en ce que l'on utilise environ 2 à 10% en poids de silice pyrogénée par rapport au total du mélange constitué par ledit polymère et ledit sel.

7. Procédé de préparation d'un film d'électrolyte selon la revendication 6, caractérisé en ce que l'on utilise environ 5% en poids de silice pyrogénée.

8. Procédé de préparation d'un film d'électrolyte selon la revendication 3, caractérisé en ce que les particules de silice pyrogénée ont été traitées chimiquement à l'aide de silanes afin d'introduire des groupements hydrophobes en surface.

9. Procédé de préparation d'un film d'électrolyte selon la revendication 3, caractérisé en ce que la silice pyrogénée est choisie parmi les composés AÉROSIL et CABOSIL.

10. Composition pour la préparation d'un film d'électrolyte pour batteries au lithium/électrolyte polymère caractérisée en ce qu'elle comprend un polymère et un sel de lithium utilisables dans lesdits électrolytes et des poudres ultra fines d'oxydes métalliques dont la granulométrie se situe entre environ 7 et 40 nm.

11. Composition selon la revendication 10, caractérisée en ce que les oxydes métalliques sont choisis parmi les oxydes de silicium, d'aluminium, et de titane.

12. Composition selon la revendication 1, caractérisée en ce que la poudre ultra fine consiste en une silice pyrogénée.

13. Composition selon la revendication 12, caractérisée en ce que lesdites poudres de silice pyrogénée ont une surface BET de 50 à 400 m²/g et contiennent plus de 99,8% de silice.

14. Composition selon la revendication 12, caractérisé en ce qu'elle comprend environ 2 à 10% en poids de silice pyrogénée par rapport au total du mélange constitué par ledit polymère et ledit sel.

15. Composition selon la revendication 14, caractérisé en ce qu'elle renferme environ 5% en poids de silice pyrogénée.

16. Composition selon la revendication 12, caractérisée en ce que les particules de silice pyrogénée ont été traitées chimiquement à l'aide de silanes afin d'introduire des groupements hydrophobes en surface.

17. Composition selon la revendication 12, caractérisée en ce que la silice pyrogénée est choisie parmi les composés AÉROSIL et CABOSIL.

18. Électrolyte pour batteries au lithium/électrolyte polymère caractérisé en ce qu'il est constitué d'une composition telle que définie dans l'une quelconque des revendications 10 à 17.

19. Générateur électrochimique comportant une anode, une cathode ainsi qu'un électrolyte polymère caractérisé en ce que l'électrolyte polymère est constitué d'une composition telle que définie dans l'une quelconque des revendications 10 à 17.
